# EUROPÄISCHE PATENTSCHRIFT

(11) **EP 1 195 357 B1**
(45) Veröffentlichungstag und Bekanntmachung des Hinweises auf die Patenterteilung: **08.12.2004**
(21) Anmeldenummer: 01128343.9
(22) Anmeldetag: 08.09.1999
(51) Int. Cl.: C02F 1/00, A47J 31/60

(54) **Wasserfiltervorrichtung mit einer Auffangkanne und mit Heizelement**
Water filter treatment device with jug and heating element
Dispositif de filtration d'eau avec récipient et élément de chauffage

(30) Priorität: 09.10.1998 DE 19846583
(43) Veröffentlichungstag der Anmeldung: 10.04.2002
(62) Teilanmeldung aus: 99117695.9
(73) Patentinhaber: Brita GmbH, 65232 Taunusstein (DE)
(72) Erfinder: Henke, Holger, 65824 Schwalbach (DE); Weyrauch, Detlev, Dr., 56271 Kleinmaischeid (DE)
(74) Vertreter: Weber-Bruls, Dorothée, Dr.

(56) Entgegenhaltungen:
- EP-A- 0 880 986
- WO-A-95/03733
- WO-A-96/22045
- WO-A-99/10076
- GB-A- 2 294 631
- US-A- 5 637 214

## Beschreibung

Die Erfindung betrifft eine Wasserfiltervorrichtung für eine Kartusche, mit einer teilweise mit Rohwasser befüllbaren Auffangkanne, einem Deckel zum Verschließen der Auffangkanne an ihrem oberen Rand, einer am oberen Rand der Auffangkanne in einem ersten, vorderen Bereich der selben angeordneten Schnaupe, einem Griff an einem zweiten, dem ersten Bereich gegenüberliegenden, hinteren Bereich der Auffangkanne, einem elektrischen Heizelement zum Aufheizen von durch die Kartusche gereinigtem Rohwasser in einem in der Auffangkanne relativ zum oberen Rand unten angeordneten Kochbereich und einem Isoliereinsatz, der eine Trennwand zum Abtrennen des Kochbereichs von einem Rohwasserbereich und eine Durchlauföffnung für von der Kartusche gereinigtem Rohwasser in den Kochbereich, so daß gereinigtes Rohwasser aus dem Kochbereich über die Schnaupe ausgießbar ist, umfaßt.

Zur Erwärmung bzw. Aufheizung von über eine Filterkartusche aufbereitetem Trinkwasser finden Wasserfiltervorrichtungen Verwendung, die in Form einer Auffangkanne ausgebildet sind und in deren Innerem die Filterkartusche sowie ein Heizelement angeordnet sind.

So ist beispielsweise aus der WO 95/13733 ein Wasserkessel bekannt, bei dem ein Auffangbehälter, der in seinem Bodenbereich mit einem Heizelement ausgerüstet ist, mit einem Dekkel verschließbar ist, an dem eine Filterkartusche angebracht ist. Rohwasser ist über eine Öffnung des Deckels in einen Raum oberhalb der Filterkartusche innerhalb des Deckels einfüllbar und fließt dann aufgrund seiner Schwerkraft durch die Kartusche hindurch.

Ferner ist aus der WO 96/22045 eine gattungsgemäße Wasserfiltervorrichtung bekannt, bei der der Isoliereinsatz im wesentlichen trichterförmig ist und an seinem unteren Ende eine Kartusche beherbergen kann, so daß in die Auffangkanne eingefülltes Rohwasser aufgrund der Schwerkraft die Kartusche durchläuft und über die Öffnung in dem Isoliereinsatz in den mit dem Heizelement versehenen Kochraum der Auffangkanne gelangt, dort erhitzt und über eine am oberen Rand der Auffangkanne befindliche Schnaupe ausgegossen werden kann. Um das möglicherweise hitzeempfindliche Granulat innerhalb der Kartusche thermisch von dem Kochraum abzukoppeln, ist die Kartusche beabstandet in eine von den Wänden des Isoliereinatzes geformte Vertiefung eingelassen und kann zudem durch Einsatz einer Doppel-Wandung, einer Isolationsfolie oder Wärmedämmschaums geschützt sein.

Aus der WO 99/10076 ist eine weitere herkömmliche Wasserfiltervorrichtung mit einer Filterkartusche in einer Auffangkanne am Boden eines Trichtereinsatzes zur Aufnahme von Rohwasser bekannt. An der Unterseite des Trichtereinsatzes ist dabei eine über ein Federelement verschließbare Öffnung zum Abfluß von gereinigtem Wasser angeordnet. Die Verschließbarkeit der Öffnung soll verhindern, daß, wenn die Filterkartusche nicht vorschriftsmäßig in dem Trichtereinsatz installiert ist, ungefilterte Flüssigkeit aus dem Trichtereinsatz austreten und somit über eine Schnaupe vom Endverbraucher ausgießbar ist.

Aufgabe der vorliegenden Erfindung ist es, die gattungsgemäße Wasserfiltervorrichtung derart weiterzuentwickeln, daß die Nachteile des Standes der Technik überwunden werden, insbesondere eine Dosierung der in den Kochbereich der Auffangkanne gelangenden, gefilterten Wassermenge, vorzugsweise während des Betriebes der Wasserfiltervorrichtung, zu ermöglichen und gleichzeitig einen erhöhten Schutz des verwendeten, möglicherweise hitzeempfindlichen Reinigungsgranulats zu bieten.

Diese Aufgabe wird erfindungsgemäß dadurch gelöst, daß die Durchlauföffnung in dem hinteren Bereich der Auffangkanne, näher an dem Griff als an der Schnaupe, sowie im unteren Bereich des Isoliereinsatzes angeordnet und mit einer Verschließeinrichtung versehen ist, so dass die durch eine Filterkartusche durchfließende Wassermenge dosiert einem Kochbereich zuführbar ist, und dass sich die Trennwand über zumindest einen Teil des Querschnitts der Auffangkanne im wesentlichen horizontal erstreckt, wobei vorzugsweise die Trennwand zumindest bereichsweise zur Durchlauföffnung geneigt ist.

Dabei kann vorgesehen sein, daß sich die Trennwand über zumindest einen Teil des Querschnitts der Auffangkanne im wesentlichen horizontal erstreckt, wobei vorzugsweise die Trennwand zumindestens bereichsweise zur Durchlauföffnung geneigt ist.

Erfindungsgemäß kann weiterhin vorgesehen sein, daß der Isoliereinsatz einen Isolierraum zumindest teilweise um die Kartusche herum bereitstellt. Ferner kann gemäß der Erfindung vorgesehen sein, daß der Isoliereinsatz eine schachtartige Vertiefung aufweist, in der sich die Durchlauföffnung befindet, wobei vorzugsweise die Vertiefung von dem sich im wesentlichen horizontal erstreckenden Teil der Trennwand über einen vertikal aufragenden Teil der Trennwand getrennt ist.

Erfindungsgemäß wird auch vorgeschlagen, daß die Filterkartusche, vorzugsweise beabstandet vom Boden des Isoliereinsatzes zur Bildung eines Filtratzwischenspeichers, in der schachtartigen Vertiefung angeordnet ist.

Dabei ist bevorzugt, daß die Durchlauföffnung in dem vertikal anfragenden Teil der Trennwand, oberhalb des Bodens, angeordnet ist.

Zudem kann dabei nach der Erfindung vorgesehen sein, daß die schachtartige Vertiefung des Isoliereinsatzes in dem dem Griff zugewandten hinteren Bereich des Isoliereinsatzes angeordnet ist.

Auch ist eine bevorzugte erfindungsgemäße Weiterentwicklung dadurch gekennzeichnet, daß das elektrische Heizelement über einen Schalter am Griff schaltbar ist.

Schließlich wird erfindungsgemäß noch vorteilhafterweise vorgeschlagen, daß das elektrische Heizelement nur aktivierbar ist, wenn über die Verschließeinrichtung die Durchlauföffnung im Isoliereinsatz verschlossen ist.

Der Erfindung liegt somit die überraschende Erkenntnis zugrunde, daß eine Wasserfiltervorrichtung so ausgeführt werden kann, daß die durch eine Filterkartusche durchfließende Wassermenge dosiert einem Kochbereich zuführbar ist und gleichzeitig die Filterkartusche vor einer Überhitzung durch Kontaktierung mit siedendem Wasser und/oder Wasserdampf aus dem Kochbereich geschützt wird, indem der Durchlauföffnung eine Verschließeinrichtung zugeordnet wird. Somit wird unter anderem einerseits bei geringen Füllmengen im Kochbereich eine Kontaktierung der Filterkartusche mit Wasserdampf und andererseits bei hohen Füllmengen ein Rücklauf von erhitztem Wasser zur Filterkartusche verhindert bzw. eine Konvektionsbewegung desselben zur Filterkartusche unterbunden.

Der konstruktiv einfache Aufbau der erfindungsgemäßen Wasserfiltervorrichtung ermöglicht zudem eine einfache Montage, insbesondere wenn die Verschließeinrichtung über einen Schalter am Griff betätigbar sein soll, aufgrund kurzer Installationsstrecken.

Vorteilhaft erweist sich auch die Positionierung des elektrischen Schalters für das Heizelement als auch dessen Wirkverbindung mit der Verschließeinrichtung im Bereich des Griffes, wodurch eine Benutzung der Wasserfiltervorrichtung über eine Ein-Hand-Bedienung möglich wird.

Durch die erfindungsgemäße Anordnung der Filterkartusche in dem dem Griff zugewandten, hinteren Bereich der Auffangkanne wird, bedingt durch Gewichtsverlagerung, beim Kippen der Auffangkanne zu deren gänzlicher, oder teilweiser Entleerung über die Schnaupe ein geringeres Drehmoment benötigt, woraus eine bequeme Handhabung resultiert.

Nicht zuletzt ist auf den durch den erfindungsgemäßen Aufbau ansprechenden optischen Eindruck hinzuweisen.

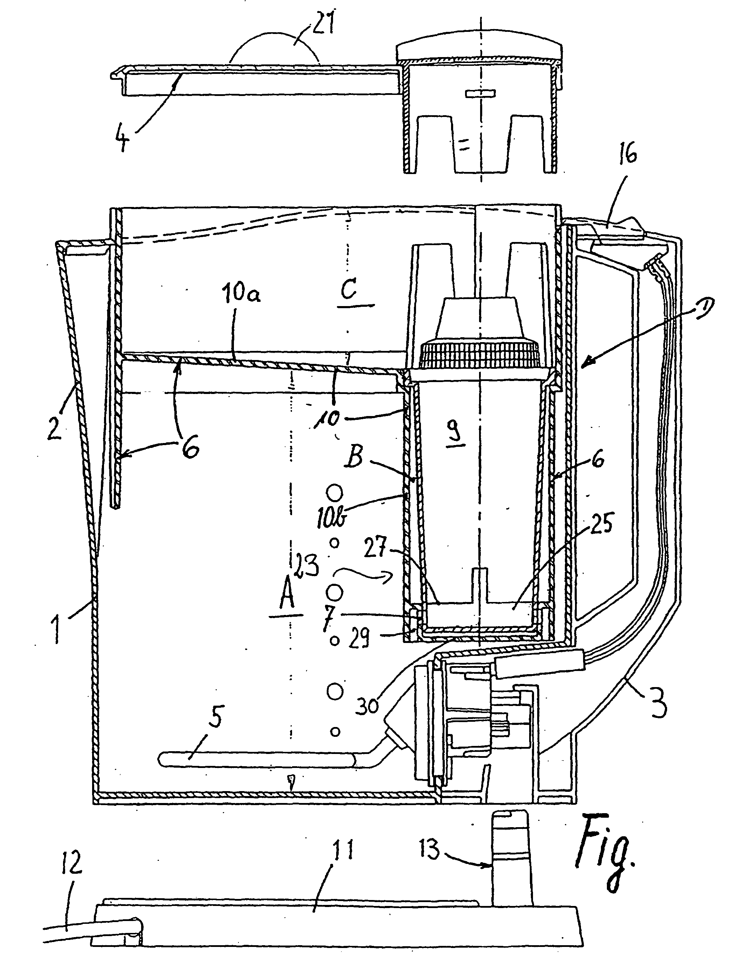

Weitere Merkmale und Vorteile der Erfindung ergeben sich aus der nachstehenden Beschreibung, in der ein Ausführungsbeispiel anhand einer aus einer einzigen Figur bestehenden Zeichnung im einzelnen erläutert wird. Dabei zeigt die Figur schematisch eine Schnittansicht durch ein Ausführungsbeispiel einer erfindungsgemäßen Wasserfiltervorrichtung.

Wie der Figur zu entnehmen ist, umfaßt eine erfindungsgemäße Wasserfiltervorrichtung eine Auffangkanne 1, die in ihrem vorderen Bereich an ihrem oberen Rand eine Schnaupe 2 aufweist und an ihrem hinteren Bereich D einen Griff 3 trägt. Die Auffangkanne 1 ist durch einen Deckel 4 mit einem Deckelgriff 21 verschließbar. In dem unteren Bereich der Auffangkanne 1 ist ein Kochbereich A mit einem elektrischen Heizelement 5 angeordnet, wobei der Kochbereich A von einem oberen Bereich, der im Folgenden als Rohwasserbereich C bezeichnet wird, über einen in der Auffangkanne 1 angeordneten Isoliereinsatz 6 abgetrennt ist. In dem Isoliereinsatz 6 ist eine Kartusche 9 so plazierbar, daß in die Auffangkanne 1 eingefülltes Rohwasser von dem Rohwasserbereich C von seiner Schwerkraft angetrieben durch die Kartusche 9, in der sich eine Reinigung des Rohwassers vollzieht, fließt und über eine Durchlauföffnung 7 und einen Auslaufkanal 29 in den Kochbereich A gelangt. Die Kartusche 9 ist zu ihrem unteren Ende hin konisch ausgestaltet und bildet so, nach Einbau in ihren Sitz im Isoliereinsatz 6, der eine hierfür vorgesehene schachtartige Vertiefung 23 auf seiner dem Griff 3 zugewandten Seite aufweist, einen Isolierraum B. Die schachtartige Vertiefung 23 und somit der Isolierraum B werden durch einen im wesentlichen vertikal aufragenden Teil 10b einer Trennwand 10 des Isoliereinsatzes 6 begrenzt, während ein im wesentlichen horizontaler Teil 10a der Trennwand 10 den Kochbereich A vom Rohwasserbereich C trennt. Der Boden 30 des Isoliereinsatzes 6 im unteren Bereich der schachtartigen Vertiefung 23 ist so ausgeformt, daß nach Einbau der Kartusche 9 das Auslaufende 27 der Kartusche vom Isoliereinsatz 6 beabstandet ist und dadurch ein sogenannter Filtratzwischenspeicher 25 entsteht. Ferner ist der im wesentlichen horizontale Teil 10a der Trennwand 10 zum besseren Abfluß des Rohwassers zur schachtartigen Vertiefung 23 geneigt.

Ein Netzanschluß des elektrischen Heizelementes 5 erfolgt über einen von der Auffangkanne 1 separierbaren Elektrostecksockel 11, nämlich über eine elektrische Zuleitung 12. Der Elektrostecksockel 11 kommuniziert mit der Elektrik der Auffangkanne 1, insbesondere einem elektrischen Schalter 16 im Griff 3 der Auffangkanne 1, über einen am Elektrostecksockel 11 angeordneten elektrischen Steckverbinder 13. So wird eine bequeme Transportabilität der Auffangkanne 1 ohne lästige Stromzuführkabel durch die einfache Entnahme vom Elektrostecksockel 11 gesichert. Das elektrische Heizelement 5 ist über einen am oberen Ende des Griffes 3 installierten elektrischen Schalter 16 ein- bzw. ausschaltbar, der zudem in Wirkverbindung mit einer nicht näher dargestellten Verschließeinrichtung für die Durchlauföffnung 7 steht. Diese Verschließeinrichtung ermöglicht ein Dosieren der dem Kochereich A zugeführten Menge an von der Kartusche 9 gereinigtem Rohwasser und dient dem Schutz der Kartusche 9 im Isolierbereich B vor Überhitzung.

Die in der vorstehenden Beschreibung, in den Ansprüchen sowie in der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Auffangkanne
- 2: Schnaupe
- 3: Griff
- 4: Deckel
- 5: elektrisches Heizelement
- 6: Isoliereinsatz
- 7: Durchlauföffnung
- 9: Kartusche
- 10: Trennwand
- 10a: horizontaler Teil der Trennwand
- 10b: vertikal aufragender Teil der Trennwand
- 11: Elektrostecksockel
- 12: elektrische Zuleitung
- 13: elektrischer Steckverbinder
- 16: elektrischer Schalter
- 21: Deckelgriff
- 23: schachtartige Vertiefung
- 25: Filtratzwischenspeicher
- 27: Auslaufende der Filterkartusche
- 29: Auslaufkanal
- 30: Boden der schachtartigen Vertiefung

- A: Kochbereich
- B: Isolierraum
- C: Rohwasserbereich
- D: hinterer Bereich der Auffangkanne

## Patentansprüche

1. Wasserfiltervorrichtung für eine Kartusche (9), mit
- einer teilweise mit Rohwasser befüllbaren Auffangkanne (1),
- einem Deckel (4) zum Verschließen der Auffangkanne (1) an ihrem oberen Rand,
- einer am oberen Rand der Auffangkanne (1) in einem ersten, vorderen Bereich der selben angeordneten Schnaupe (2),
- einem Griff (3) an einem zweiten, dem ersten Bereich gegenüberliegenden, hinteren Bereich (D) der Auffangkanne (1),
- einem elektrischen Heizelement (5) zum Aufheizen von durch die Kartusche (9) gereinigtem Rohwasser in einem in der Auffangkanne (1) relativ zum oberen Rand unten angeordneten Kochbereich (A) und
- einem Isoliereinsatz (6), der
• eine Trennwand (10, 10a, 10b) zum Abtrennen des Kochbereichs (A) von einem Rohwasserbereich (C) und
• eine Durchlauföffnung (7) für von der Kartusche (9) gereinigtes Rohwasser in den Kochbereich (A), so dass gereinigtes Rohwasser aus dem Kochbereich (A) über die Schnaupe (2) ausgießbar ist,
umfasst,
**dadurch gekennzeichnet, dass**
die Durchlauföffnung (7) in dem hinteren Bereich (D) der Auffangkanne (1), näher an dem Griff (3) als an der Schnaupe (2), sowie im unteren Bereich des Isoliereinsatzes angeordnet und mit einer Verschließeinrichtung versehen ist, so dass die durch eine Filterkartusche durchfließende Wassermenge dosiert einem Kochbereich zuführbar ist, und dass sich die Trennwand (10, 10a) über zumindest einen Teil des Querschnitts der Auffangkanne (1) im wesentlichen horizontal erstreckt, wobei vorzugsweise die Trennwand (10) zumindest bereichsweise zur Durchlauföffnung (7) geneigt ist.

2. Wasserfiltervorrichtung nach Anspruch 1, **dadurch gekennzeichnet, daß** der Isoliereinsatz (6) einen Isolierraum (B) zumindest teilweise um die Kartusche (9) herum bereitstellt.

3. Wasserfiltervorrichtung nach einem der vorangehenden Ansprüche, **dadurch gekennzeichnet, daß**
der Isoliereinsatz (6) eine schachtartige Vertiefung (23) aufweist, in der sich die Durchlauföffnung (7) befindet, wobei vorzugsweise die Vertiefung (23) von dem sich im wesentlichen horizontal erstreckenden Teil der Trennwand (10a) über einen vertikal aufragenden Teil der Trennwand (10b) getrennt ist.

4. Wasserfiltervorrichtung nach Anspruch 3, **dadurch gekennzeichnet, daß**
die Filterkartusche (9), vorzugsweise beabstandet vom Boden (30) des Isoliereinsatzes (6) zur Bildung eines Filtratzwischenspeichers (25), in der schachtartigen Vertiefung (23) angeordnet ist.

5. Wasserfiltervorrichtung nach Anspruch 4, **dadurch gekennzeichnet, daß**
die Durchlauföffnung (7) in dem vertikal aufragenden Teil der Trennwand (10b), oberhalb des Bodens (30), angeordnet ist.

6. Wasserfiltervorrichtung nach einem der Ansprüche 3 bis 5, **dadurch gekennzeichnet, daß**
die schachtartige Vertiefung (23) des Isoliereinsatzes (6) in dem dem Griff (3) zugewandten hinteren Bereich (D) des Isoliereinsatzes (6) angeordnet ist.

7. Wasserfiltervorrichtung nach einem der vorangehenden Ansprüche, **dadurch gekennzeichnet, daß**
das elektrische Heizelement (5) über einen Schalter (16) am Griff (3) schaltbar ist.

8. Wasserfiltervorrichtung nach einem der vorangehenden Ansprüche, **dadurch gekennzeichnet, daß**
das elektrische Heizelement (5) nur aktivierbar ist, wenn über die Verschließeinrichtung die Durchlauföffnung (7) im Isoliereinsatz (6) verschlossen ist.

## Claims

1. A water filter device for a cartridge (9) with
- a collecting jug (1) partially fillable with untreated water,
- a lid (4) to close the collecting jug (1) at its top edge,
- a spout (2) disposed at the top edge of the collecting jug (1) in a first front zone thereof,
- a handle (3) at a second rear zone (D) of the collecting jug (1) remote from the first zone,
- an electric heater element (5) to heat untreated water purified by the cartridge (9), in a boiling zone (A) disposed in the collecting jug (1) at the bottom relatively to the top edge and
- an insulating insert (6), which
• comprises a partition (10, 10a, 10b) to separate the boiling zone (A) from an untreated water zone (C) and
• an opening (7) for the passage of untreated water purified by the cartridge (9) into the boiling zone (A) so that purified untreated water can be poured out of the boiling zone (A) via the spout (2),
**characterised in that**
the passage opening (7) is disposed in the rear zone (D) of the collecting jug (1) closer to the handle (3) than to the spout (2), and in the bottom zone of the insulating insert, and is provided with a closure device so that the amount of water flowing through a filter cartridge can be fed controllably to a boiling zone, and **in that** the partition (10, 10a) extends over at least a part of the cross-section of the collecting jug (1) substantially horizontally, while the partition (10) is preferably inclined to the passage opening (7) at least in zones.

2. A water filter device according to claim 1, **characterised in that** the insulating insert (6) provides an insulated chamber (B) at least partially around the cartridge (9).

3. A water filter device according to any one of the preceding claims, **characterised in that** the insulating insert (6) has a recess (23) in the form of a shaft in which the passage opening (7) is located, the recess (23) preferably being separated from the substantially horizontally extending part of the partition (10a) by means of a vertically extending part of the partition (10b).

4. A water filter device according to claim 3, **characterised in that** the filter cartridge (9) is disposed preferably in spaced relationship from the base (30) of the insulating insert (6) in the shaft-like recess (23) so as to form a filtrate buffer store (25).

5. A water filter device according to claim 4, **characterised in that** the passage opening (7) is disposed in the vertically extending part of the partition (10b) above the base (30).

6. A water filter device according to any one of claims 3 to 5, **characterised in that** the shaft-like recess (23) of the insulating insert (6) is disposed in the rear zone (D) of the insulating insert (6) facing the handle (3).

7. A water filter device according to any one of the preceding claims, **characterised in that** the electric heater element (5) is adapted to be switched by means of a switch (16) on the handle (3).

8. A water filter device according to any one of the preceding claims, **characterised in that** the electric heater element (5) is adapted to be activated only when the passage opening (7) in the insulating insert (6) is closed by means of the closure device.

## Revendications

1. Dispositif de filtration d'eau pour une cartouche (9) comprenant
- un récipient (1) qui peut être rempli partiellement avec de l'eau du robinet,
- un couvercle (4) pour obturation du récipient (1) dans une première zone avant du bec verseur (2) disposé de manière similaire,
- une poignée (3) dans une deuxième zone arrière (D) du récipient (1) disposée en regard de la première zone,
- un élément chauffant électrique (5) pour chauffage de l'eau du robinet purifiée à travers la cartouche (9) dans une zone de chauffage (A) disposée dans le récipient (1) en dessous d'un bord supérieur et
- un revêtement isolant (6), lequel comporte
• une paroi séparation (10,10a,10b) destinée à séparer la zone de chauffage (A) d'une zone d'eau du robinet (C) et
• une ouverture à écoulement libre (7) pour l'eau du robinet présente dans la zone de chauffage (A) purifiée à partir de la cartouche (9), de sorte que l'eau du robinet purifiée peut être versée hors de la zone de chauffage (A) par le bec verseur (2),
**caractérisé en ce que**
l'ouverture à écoulement libre (7) dans la zone arrière (D) du récipient (1) est formée plus près de la poignée (3) que du bec verseur (2), de même que dans la zone inférieure du revêtement isolant, et est munie d'un organe d'obturation, de sorte que la quantité d'eau dosée s'écoulant à travers la cartouche de filtration peut être conduite dans la zone de chauffage et que la paroi de séparation (10, 10a) s'étend de manière essentiellement horizontale sur au moins une partie de la section du récipient (1), moyennant quoi, de préférence, la paroi de séparation (10) est inclinée au moins de manière délimitée sur l'ouverture à écoulement libre (7).

2. Dispositif de filtration d'eau selon la revendication 1, **caractérisé en ce que** le revêtement isolant (6) permet de disposer d'un compartiment isolant entourant au moins partiellement la cartouche (9).

3. Dispositif de filtration d'eau selon l'une des revendications précédentes, **caractérisé en ce que** le revêtement isolant (6) forme une cavité du type cuve (23), dans laquelle se trouve l'ouverture à écoulement libre (7), de préférence, de laquelle cavité (23) la partie de la paroi de séparation (10a), s'étendant de manière essentiellement horizontale sur une partie en élévation verticale de la paroi de séparation (10b), est séparée.

4. Dispositif de filtration d'eau selon la revendication 3, **caractérisé en ce que** la cartouche de filtration (9) est disposée, de préférence, à l'écart du fond (30) du revêtement isolant (6) pour former un réservoir intermédiaire de filtration (25) dans la cavité (23).

5. Dispositif de filtration d'eau selon la revendication 4, **caractérisé en ce que** l'ouverture à écoulement libre (7) est formée dans la partie en élévation verticale de la paroi de séparation (10b) en amont du fond (30).

6. Dispositif de filtration d'eau selon la revendication 3 à 5, **caractérisé en ce que** la cavité du type cuve (23) du revêtement isolant (6) est formée dans la zone arrière (D) du revêtement isolant (6) orientée vers la poignée (3).

7. Dispositif de filtration d'eau selon l'une des revendications précédentes, **caractérisé en ce que** l'élément chauffant électrique (5) est commutable par un commutateur (16).

8. Dispositif de filtration d'eau selon l'une des revendications précédentes, **caractérisé en ce que** l'élément chauffant électrique (5) n'est activable que lorsque l'ouverture à écoulement libre (7) dans le revêtement isolant (6) est fermée par l'organe d'obturation.
